# EUROPEAN PATENT APPLICATION

(11) **EP 2 666 698 A2**
(43) Date of publication of application: **27.11.2013**
(21) Application number: 13167777.5
(22) Date of filing: 15.05.2013
(51) Int. Cl.: B62B 1/02, B62B 5/06

(54) **Manoeuvring handle for trolley reel.**

(30) Priority: 21.05.2012 IT MI20120197 U
(71) Applicant: CLABER S.P.A., 33080 Fiume Veneto (PN) (IT)
(72) Inventor: Spadotto, Oliviano, 33170 PORDENONE (IT); Franchini, Gaetano, 33080 FIUME VENETO (PN) (IT)
(74) Representative: Mittler, Enrico

(57) **Abstract**

A trolley reel (1) with drum (3) rotatable about an axis parallel to the advancing direction of the trolley (13) is provided with a manoeuvring handle (26) comprising a telescopic structure (41, 42) with fixed lower part (41) and movable upper part (42) which extends upwards from a rear portion (23) of the trolley (13) in position laterally displaced with respect to the rotation axis of the drum. (Fig. 2)

## Description

The present invention relates to a manoeuvring handle for trolley reel.

Within the gardening sector, the use of widespread, common flexible pipes is at the basis of irrigating more or less extended fields, and subsequently of water distribution. Starting from the water intake, the flexible pipe is to cover, with the entire length thereof and the displacement thereof, the entire surface wanted to be replenished with water. At the same time, there is the need to minimize the volume of the flexible pipe when it is not used, or used for a small field area with respect to the water intake. The reel falls within this context and during movements along the work route, allows an adequate length of the flexible pipe to be available, thus at the same time ensuring an orderly repositioning once work is complete.

Trolley reels are known, which comprise a pipe winding device and a trolley with wheels for moving the pipe winding device. The pipe winding device comprises a drum for winding the flexible pipe, which is rotatably supported by a pair of trolley side walls. A crank allows the manual rotation of the drum to wind the flexible pipe. A handle for manoeuvring the trolley extends upwards from the trolley.

The pipe winding device and the trolley typically form a single structure, but may be made separable from each other in the way described in a concurrent patent application filed by the applicant. In the latter case, the pipe winding device may be removed and rested on the ground or attached to a wall and the trolley may be temporarily intended for other uses.

In traditional trolley reels, the axis of rotation of the drum is perpendicular to the advancing direction of the trolley, resulting in one of the pins with which the trolley is rotatably supported by the side walls possibly also acting as fitting, firstly, for the flexible pipe wound on the drum and, secondly, for a further flexible pipe intended to connect the reel to a water supply intake.

An arrangement of the drum with axis parallel to the advancing direction of the trolley has not yet been possible because the trolley handle would conflict with the connection of the reel at the water intake, thus complicating if not making it impossible both to manoeuvre the trolley and supply water to the reel.

On the other hand, a reel with drum which is rotatable about an axis parallel to the advancing direction of the trolley would allow decreasing the lateral volume of the reel, as is desirable in most cases.

It is now the object of the present invention to make a handle manoeuvring structure for a trolley reel which makes the arrangement of the drum possible with the axis of rotation parallel to the advancing direction of the trolley.

According to the invention, such an object is achieved by making a manoeuvring handle for a trolley reel with drum rotatable about an axis parallel to the advancing direction of the trolley, **characterized in that** it comprises a telescopic structure with fixed lower part and movable upper part which extends upwards from a rear portion of the trolley in position laterally displaced with respect to the axis of rotation of the drum.

In particular, the fixed lower part of the aforesaid telescopic structure is placed beside a corresponding side wall for supporting the drum and may be connected at the two side ends of the rear portion of the trolley by means of appropriate connecting bars.

The features of the present invention will become apparent from the following detailed description of embodiments thereof, shown by way of non-limiting example in the accompanying drawings, in which:
figure 1 shows a front perspective view of a trolley reel provided with an offset extendible handle according to the present invention;
figure 2 shows the same reel in rear perspective view;
figure 3 shows a rear perspective view of a trolley reel provided with an offset extendible handle according to a variant of the present invention;
figure 4 shows a front perspective view of the reel trolley in figure 1, separated from the pipe winding device;
figure 5 shows a front perspective view of a trolley version with four wheels.

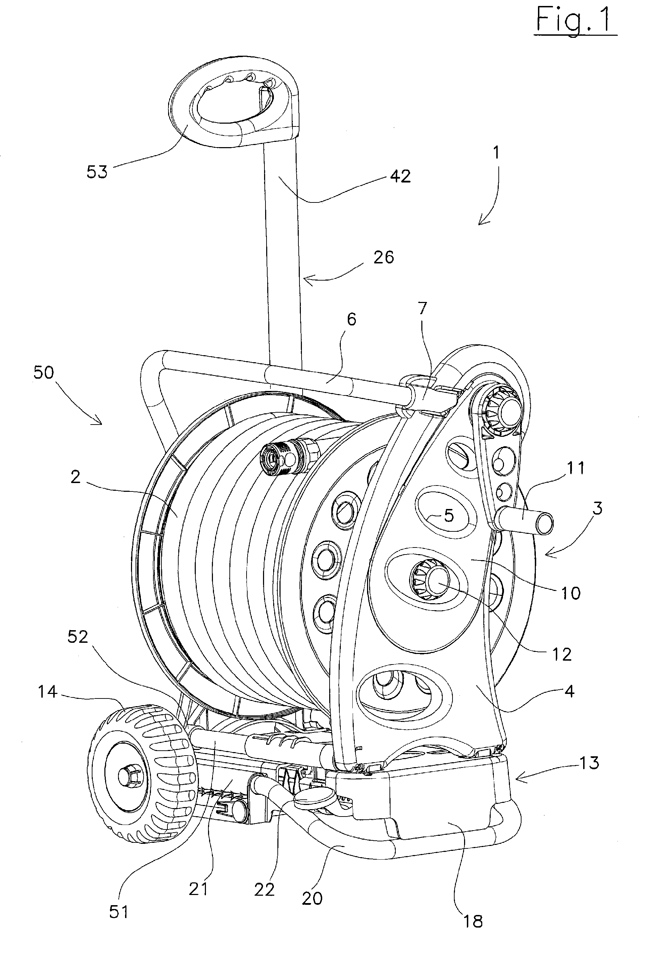

With reference to figure 1, a reel 1 for flexible irrigation pipe 2 comprises a pipe winding device 50 consisting of a flanged drum 3 rotatably supported by two arched side walls 4 with weight-reducing holes 5. The two side walls 4 are connected by an upper tubular element 6 with ends inserted within specific housings 7 on the upper part of the side walls 4, and by a pair of lower tubular bars 51 in turn with ends inserted within housings 52 of the side walls 4.

In the example shown, a crank 11 is provided for the rotation of drum 3 about the axis thereof, which is kinetically connected to the supporting shaft and rotation of the drum (which fastening ring nut 12 is shown in figure 1) by means of a reduction gear 10 inserted in one of the two side walls 4. Alternatively, crank 11 may be directly positioned on the axis of rotation of the drum.

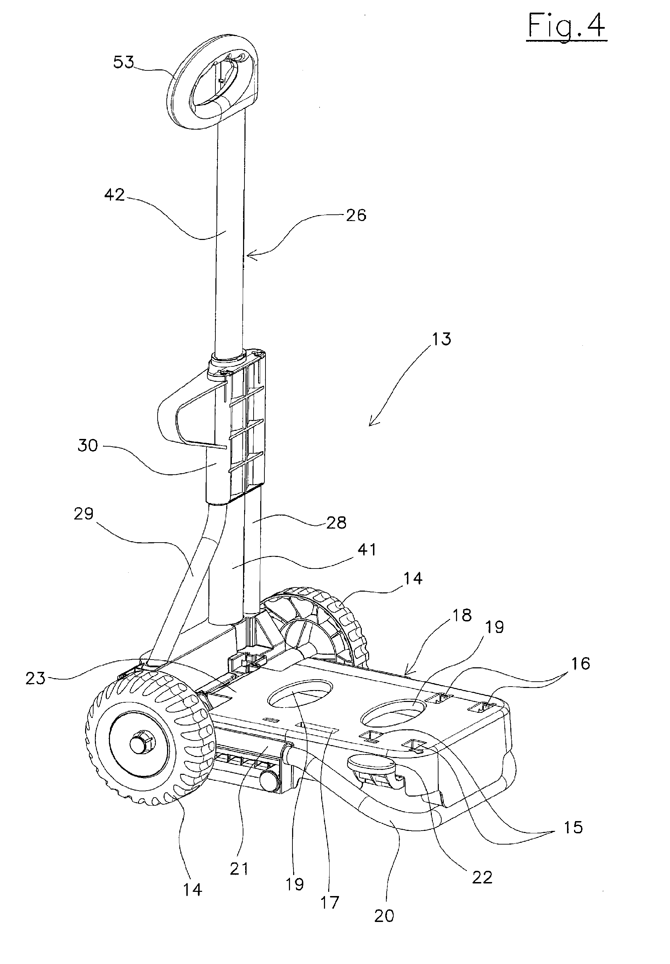

The pipe winding device 50 is placed on a trolley 13 provided with freely rotatable resting wheels 14, and the positioning is such that the projections of the pipe winding device 50 are at positioning seats 15, 16 and at a cavity 17 located on a base 18 of trolley 13, as shown in figure 4. Base 18 comprises two oval cavities 19 and a metal tubular U-shaped supporting frame 20, with ends inserted within side housings 21 of base 18. Frame 20 extends below base 18 thus offering a mechanical support thereto and to the pipe winding device 50 above, when present.

The pipe winding device 50 is fastened to base 18 of trolley 13 by means of a pedal 22, as described in a concurrent Italian patent application filed by the applicant.

Thereby, the pipe winding device 50 can also be used from a fixed position, such as for example resting on the ground or attached to a wall, while trolley 13 may be used separately for the most assorted functions with other types of loads. The pipe winding device can be rested on the ground and fastened to the wall due to the parallel bars 51, while the pipe winding device 50 can be manually moved due to the tubular element 6.

Unlike the known art, in which the axis rotation of the drum is parallel to the advancing direction of the trolley, the pipe winding device 50 is positioned on base 18 of trolley 13 with the axis of rotation of the drum perpendicular to the one of the wheels 14 (see figure 1) and hence parallel to the advancing direction of trolley 13. Thereby, a trolley 13 with small lateral dimensions is obtained.

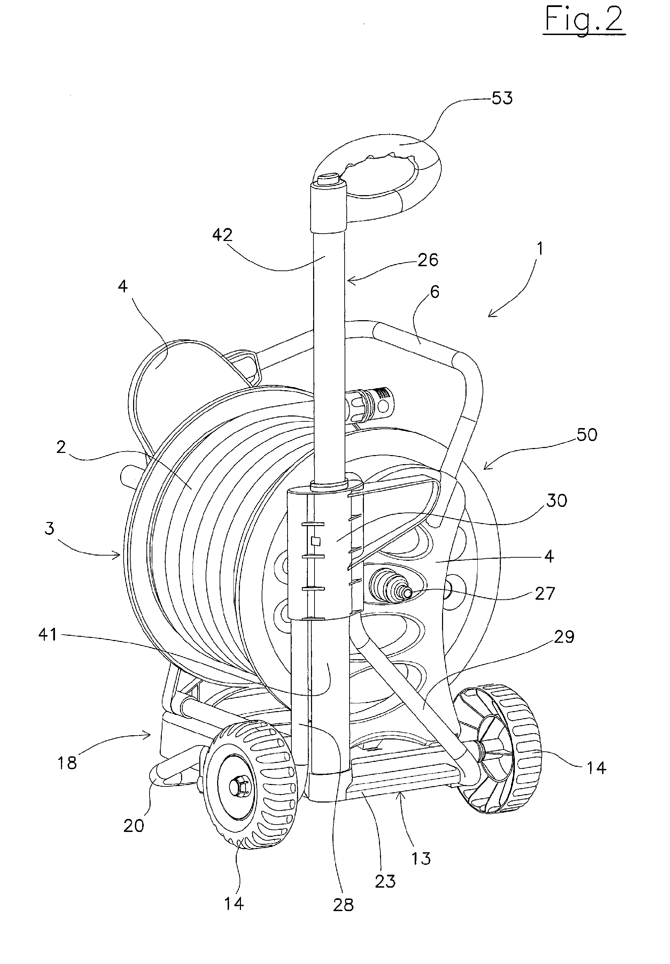

As shown in figures 1, 2 and 4, trolley 13 provides a manoeuvring handle 26 with handgrip 53, which has a telescopic structure with fixed lower part 41 and a movable upper part 42 which can be inserted and removed vertically with respect to the fixed part 41. Handle 26 is in laterally moved position with respect to the axis of rotation of reel 50 drum 3 so as to make a fitting 27 (fig. 2) accessible to be used for connecting the flexible pipe 2 to a further segment of flexible pipe connected to a water supply intake. The fixed part 41 of handle 26 is fastened to an underlying rear portion 23 of trolley 13 and is stabilized with respect thereto by means of two tubular bars 28 and 29, which are inferiorly fastened to the two side ends of the aforesaid rear portion 23 of the trolley (figures 2 and 4) and converge at the top into a junction structure 30. Thus, trolley 13 can advance and move back with or without pipe winding device 50 in a balanced manner, even though said handle 26 is offset.

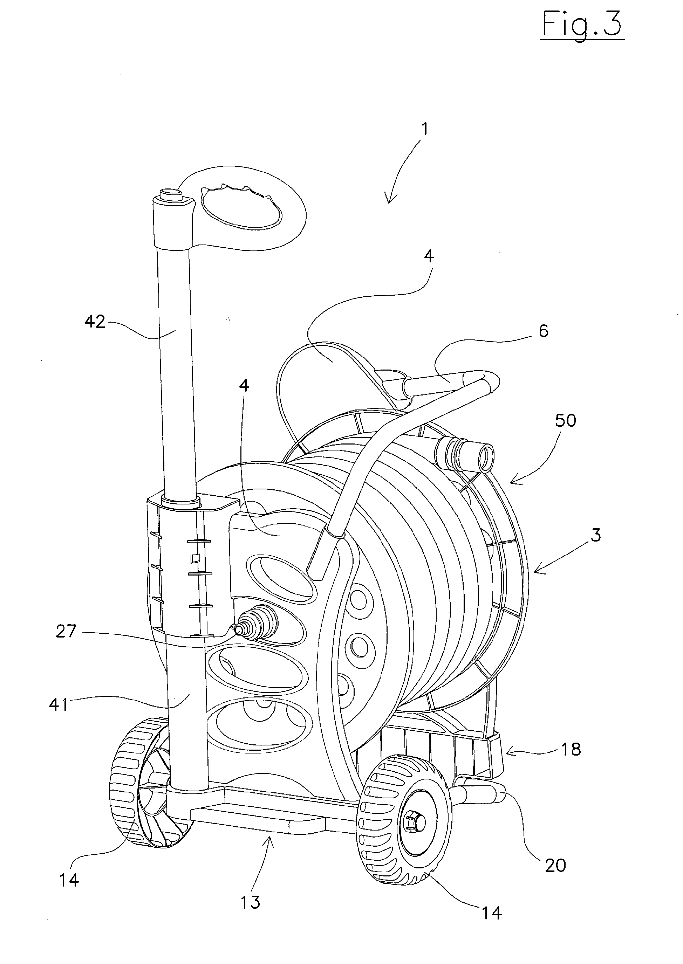

The two bars 28 and 29 may be excluded, and the fixed part 41 may in this case be fastened to the adjacent side wall 4, if the pipe winding device 50 is restrained to trolley 13 in a non-separable manner (figure 3).

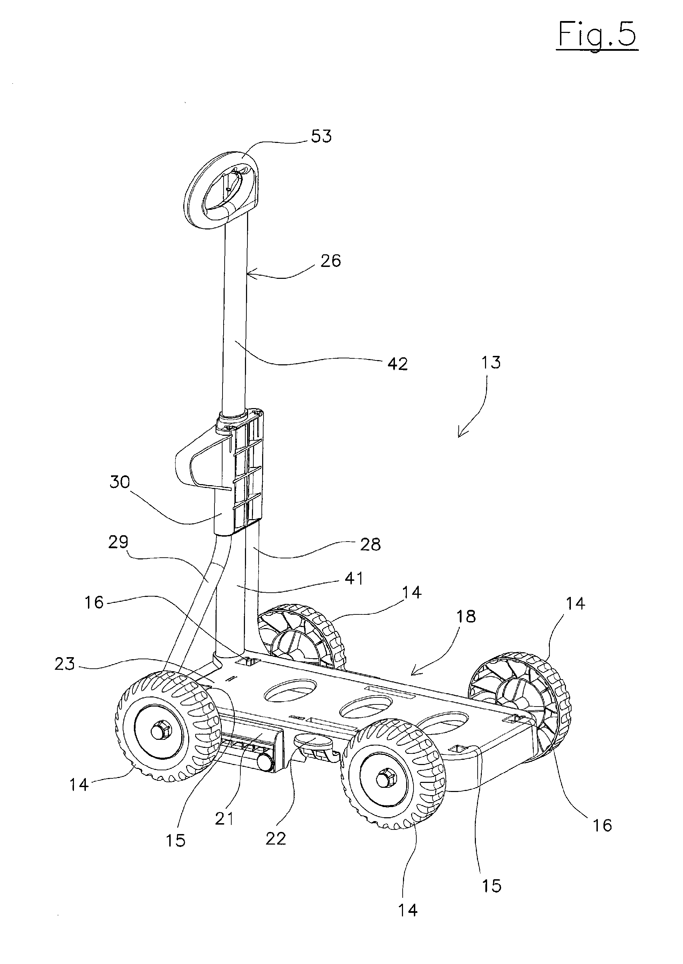

A model of reel 1 with a trolley 13 with four freely rotatable resting wheels 14 is also provided (figure 5). In the four-wheel example, the metal tubular supporting frame 20 is not provided, because base 18 alone, which is larger in size with respect to the two-wheel example, is able of supporting the weight of the fastened load. The positioning seats 15, 16 are located at the four corners of the surface of base 18. The reel fastening modes remain the ones described with two-wheel trolley 13.

## Claims

1. A manoeuvring handle (26) for a trolley reel (1) with drum (3) rotatable about an axis parallel to the advancing direction of the trolley (13), **characterized in that** it comprises a telescopic structure (41, 42) with fixed lower part (41) and movable upper part (42) which extends upwards from a rear portion (23) of the trolley (13) in position laterally displaced with respect to the axis of rotation of the drum.

2. A handle according to claim 1, **characterized in that** the fixed lower part (41) of the aforesaid telescopic structure (41, 42) is placed beside a corresponding side wall (4) for supporting the drum (3) and is connected to the two side ends of the rear portion (23) of the trolley (13) by means of connecting bars (28, 29).

3. A handle (26) according to claim 3, **characterized in that** said fixed part (41) of the telescopic structure (41, 42) and said connecting bars (28, 29) are restrained at the top by a junction structure (30).
